# EUROPÄISCHE PATENTSCHRIFT

(11) **EP 3 636 601 B1**
(45) Veröffentlichungstag und Bekanntmachung des Hinweises auf die Patenterteilung: **07.06.2023**
(21) Anmeldenummer: 19198547.2
(22) Anmeldetag: 20.09.2019
(51) Int. Cl.: C02F 1/52, C02F 1/56, C02F 1/66, C02F 3/02, C02F 101/30

(54) **MITTEL ZUM EMULSIONS- UND TENSIDABBAU IN EINEM BIOLOGISCHEN ABWASSERREINIGUNGSPROZESS**
AGENT FOR EMULSION AND SURFACTANT DEGRADATION IN A BIOLOGICAL WASTE WATER PURIFICATION PROCESS
MOYEN DE DÉGRADATION DES ÉMULSIONS ET DES AGENTS TENSIO-ACTIFS DANS UN PROCESSUS BIOLOGIQUE DE PURIFICATION DES EAUX USÉES

(30) Priorität: 09.10.2018 AT 508782018
(43) Veröffentlichungstag der Anmeldung: 15.04.2020
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A1- 2 808 306
- WO-A1-2018/077951
- CN-A- 107 915 290
- CN-A- 108 485 671

## Beschreibung

Die Erfindung bezieht sich auf ein Mittel zum Emulsions- und Tensidabbau in einem biologischen Abwasserreinigungsprozess und auf ein Verfahren zur Dosierung des Mittels. Die wesentlichen Merkmale der Erfindung sind in den unabhängigen Ansprüchen 1 und 3 zu finden. Weitere, bevorzugte Ausführungsformen sind in den abhängigen Ansprüchen 2, 4 beschrieben.

Bei vielen technischen Prozess-Abwässern sowie gewerblichen und häuslichen Abwässern fallen verschiedenste Emulsionen, sowie die darin enthaltenen Tenside als Abfallprodukt an. In biologischen Reinigungsprozessen führen Emulsionen und Tenside zur Bildung von zähen Schäumen und hemmen insbesondere die Abbauaktivität aerober Mikroorganismen, da sich Tenside zwischen den lipidhaltigen Zellmembranen und dem angrenzenden wässrigen Medium anreichern, wodurch die normalen Funktionen der Zellmembran beeinträchtigt beziehungsweise aufgehoben werden. In weiterer Folge sterben die aeroben Mikroorganismen ab, werden aus der Kläranlage ausgespült und im Abwasser durch anaerobe Mikroorganismen verdrängt. Dadurch wird die Entstehung von Fadenwachstum und folglich von unangenehmen Gerüchen sowie die Bildung korrosiver Prozesse im Abwasser begünstigt, was beispielsweise zur Schädigung von Rohrleitungen oder Pumpen führen kann. Durch diese Negativeffekte können bei einem biologischen Reinigungsprozess nicht zuletzt aufgrund einer gegebenenfalls notwendigen Neubesiedlung der Kläranlage durch aerobe Mikroorganismen sowie aufgrund der Behebung von Korrosionsschäden unnötig hohe Kosten und Standzeiten anfallen. Aufgrund der durch die Emulsionen bzw. Tenside bedingten Verunreinigungen fallen zudem insgesamt erhöhte Kosten über den gesamten Reinigungsprozess an, da neben einem erhöhten Fällmittelbedarf, erhöhten Belüftungskosten sowie längeren Aufenthaltszeiten in der Kläranlage auch zusätzliche Baukosten anfallen können, wenn die zur Verfügung stehenden baulichen Einrichtungen nicht für eine vollständige Reinigung der oben genannten Verunreinigungen reichen.

Aus dem Stand der Technik ist es bekannt, Emulsionsgemische und Tenside über bauliche Maßnahmen wie beispielsweise Adsorptionsanlagen, Elektrophorese, Membranfiltration sowie Flotationsanlagen, oder durch zusätzliche chemische Mittel, welche während des Abwasserreinigungsprozesses zudosiert werden, aus dem zu behandelnden Abwasser zu entfernen. Beispielsweise kann zur Abspaltung von Emulsionsgemischen, insbesondere Wasser-ÖlGemischen, und Tensiden die Zudosierung eines Mittels zur Beschwerung des Schlammes auf Basis von Kalkhydrat erfolgen. Nachteilig ist daran allerdings, dass es neben einer Abtrennung des Emulsionsgemisches sowie der Tenside zu einer Erhöhung des pH-Wertes im Abwasser kommt, der in weiterer Folge insbesondere bei höheren Temperaturen mit einer unerwünschten Ammoniakbildung einhergeht. Ebenso können unerwünschte Nebenreaktionen im zu behandelnden Abwasser ablaufen, die nicht nur die Abspaltwirkung des chemischen Mittels beeinträchtigen können, sondern auch zu einem verstärkten Fadenwachstum und dadurch zu einem erhöhten Fällmittelbedarf bis hin zu einer Störung des Absetzverhaltens der gebildeten Schlammflocken führen können. Daher müssen bei derartigen zudosierten Mitteln je nach deren Dosierstelle wieder zusätzliche Gegenmaßnahmen eingeleitet werden. Relevante Dokumente sind z.B. EP 2 808 306 A1, CN 107 915 290 A, CN 108 485 671 A und WO 2018/077951 A1.

Der Erfindung liegt somit die Aufgabe zugrunde, ein Mittel der eingangs geschilderten Art anzugeben, das die Abbauaktivität aerober Mikroorganismen begünstigt und insgesamt einen kosteneffizienteren biologischen Abwasserreinigungsprozess ermöglicht, ohne dass hierfür Umbauten der Kläranlage oder zusätzliche Hilfsmaßnahmen notwendig sind.

Die Erfindung löst die gestellte Aufgabe dadurch, dass das Mittel eine FeX-Lösung und eine CaX-Lösung, wobei X ein Chlorid, ein Nitrat und / oder ein Sulfat ist, eine polymere AIY-Lösung, wobei Y ein Chlorid, ein Sulfat, ein Nitrat, und / oder ein Hydroxid ist, eine auf Ascorbinsäure, Zitronensäure und/oder Milchsäure basierende Carbonsäure-Lösung sowie eine auf Polyaminen basierende Polymer-Lösung aufweist.

Der Erfindung liegt die Erkenntnis zugrunde, dass in Gegenwart von Emulsionsgemischen und Tensiden deren Oberflächenspannung sowie die Oberflächenspannung des in biologischen Abwasserreinigungsprozessen eingeblasenen Sauerstoffs an deren jeweiligen Grenzschichten zum Abwasser stark erhöht wird. Dadurch wird einerseits der Abbau von Emulsionsgemischen und Tensiden im Abwasser erschwert und andererseits nimmt die Verweilzeit des Sauerstoffes zufolge eines höheren Blasenvolumens des im Abwasser gelösten Sauerstoffes ab. Aufgrund des geringeren Sauerstoffanteiles im Abwasser werden die für den biologischen Abwasserreinigungsprozess wichtigen aeroben Mikroorganismen nach und nach von anaeroben Mikroorganismen verdrängt, die dann als dominant vorherrschende Spezies im zu behandelnden Abwasser zur Bildung geruchsintensiver Schwimm- & Blähschlamme sowie zur Bildung von Korrosionsschäden an baulichen Einrichtungen führen.

Zufolge der erfindungsgemäßen Merkmale wird sowohl eine gezielte Senkung der Oberflächenspannung der Emulsionsgemische und Tensid-Verunreinigungen sowie der Sauerstoffbläschen an deren jeweiligen Grenzschichten zum Abwasser als auch eine Aufspaltung bzw. ein Abbau der Emulsionsgemische und Tensid-Verunreinigungen durch die Eisensalz-Lösung und die Polymer-Lösung erzielt, während eine Unterbindung unerwünschter Nebenreaktionen und eine Verdrängung anaerober Mikroorganismen aus der freien Wasserphase in die Schlammflocken, sowie eine gleichzeitige Phosphatfällung über die als fällaktive Komponente wirkende Aluminiumsalz-Lösung erfolgt. Durch die Senkung der Oberflächenspannung der Sauerstoffbläschen an ihren Grenzschichten wird auch deren Volumen verringert, was eine Anreicherung des zu behandelnden Abwassers mit Sauerstoff bewirkt. Die vorhandenen aeroben Mikroorganismen finden dadurch ein ideales Milieu vor, um die gespaltenen Emulsions- und Tensidverunreinigungen zu veratmen und abzubauen. Die Polymer-Lösung verstärkt dabei die Aufspaltwirkung der Eisensalz-Lösung und wirkt als zusätzliche, leicht abbaubare Nährstoffquelle für die aeroben Mikroorganismen, die deren Abbauaktivität gleichzeitig anregt. Überraschenderweise hat sich gezeigt, dass die Calciumsalz-Lösung zusammen mit der Carbonsäure-Lösung die Aufspalt- und Abbauleistung des erfindungsgemäßen Mittels in Bezug auf die Emulsionsgemische und Tensid-Verunreinigungen katalysiert und dabei den pH-Wert des zu behandelnden Abwassers puffert, sodass kritische pH-Wert-Schwankungen unterbunden werden. Der nicht abbaubare bzw. nicht veratembare Rest der Emulsions- und Tensidverunreinigungen geht in den Schlamm über, wo dieser dann über den mechanischen Reinigungsprozess abgeschieden Als Polyamine können beispielsweise oberflächenaktive, aliphatische und / oder alkalisierende Varianten eingesetzt werden.

Besonders günstige Bedingungen ergeben sich beispielsweise, wenn das Mittel 15 - 40 Gew% einer 25 - 30 %igen Eisensalzlösung-Lösung, 5 - 20 Gew% einer Calciumsalz-Lösung, 40 - 70 % einer 30 bis 40 %igen Aluminiumsalz-Lösung, 1 - 10 Gew% einer Carbonsäurelösung sowie 1 - 15 Gew% einer Polymer-Lösung umfasst. Die Eisensalzlösung kann beispielsweise auf Eisendichlorid, die Calciumsalz-Lösung auf Calciumchlorid, die Carbonsäure-Lösung auf Ascorbinsäure, die Aluminiumsalz-Lösung auf Polyaluminiumhydroxidchlorid und die Polymer-Lösung auf Polyaminen basieren.

Die Erfindung bezieht sich auch auf ein Verfahren zur Zudosierung eines erfindungsgemäßen Mittels, wobei die Gesamtdosiermenge eines erfindungsgemäßen Mittels dabei 1 bis 1000 ppm beträgt.

Besonders günstige Bedingungen haben sich in diesem Zusammenhang ergeben, wenn zunächst die Eisensalz-Lösung als chemische Aufspaltkomponente für den Emulsions- und / oder Tensidspaltung vorgelegt wird. Anschließend wird die als Katalysator wirkende Carbonsäure zudosiert. Um die katalytische der Carbonsäure nicht zu unterbinden, muss im Anschluss an die Zugabe der Carbonsäure eine Reaktionszeit von mindestens 15 Minuten abgewartet werden, bevor die Aluminiumsalz-Lösung als fällaktive Komponente zugegeben wird. Nach Zugabe der Aluminiumsalz-Lösung wird als zweiter Katalysator die Calciumsalz-Lösung und abschließend die Polymer-Lösung zudosiert. Die Gesamtdosiermenge eines erfindungsgemäßen Mittels beträgt dabei 1 bis 1000 ppm. Ausführungsbeispiel:
Ein Mittel zum Emulsions- und Tensidabbau in einem biologischen Abwasserreinigungsprozess weist 17 Gew% einer 28 %igen Eisen-dichlorid-Lösung, 3 Gew% einer 70 %igen Ascorbinsäure-Lösung, 20 Gew% einer 30 %igen Calciumchlorid-Lösung, 50 Gew% einer 36 %igen Polyaluminiumhydroxidchlorid-Lösung sowie 10 Gew% einer Polyamin-Lösung mit einem Wirksubstanzgehalt von 70 % auf.

Eine weitere Ausführungsform eines erfindungsgemäßen Mittels weist 40 Gew%
einer 28 %igen Eisen-dichlorid-Lösung, 8 Gew% einer 30 %igen Ascorbinsäure-Lösung, 5 Gew% einer 40 %igen Calciumchlorid-Lösung, 42 Gew% einer 36 %igen Polyaluminiumhydroxidchlorid-Lösung sowie 5 Gew% einer Polyamin-Lösung mit einem Wirksubstanzgehalt von 85 % auf.

Zur Mischung und Zudosierung eines erfindungsgemäßen Mittels wird an einer entsprechenden Dosierstelle der Kläranlage zuerst die Eisen-dichlorid -Lösung als chemische Aufspaltkomponente für die Emulsions- und / oder Tensidspaltung vorgelegt. Anschließend wird die als Katalysator wirkende Ascorbinsäure zudosiert. Nach einer Mindestwartezeit von 15 Minuten wird die Polyaluminiumhydroxidchlorid -Lösung als fällaktive Komponente zugegeben. Danach wird als zweiter Katalysator die Calciumchlorid -Lösung und abschließend die Polyamin -Lösung zudosiert. Die Gesamtdosiermenge des Mittels beträgt dabei 1000 ppm.

## Patentansprüche

1. Mittel zum Emulsions- und Tensidabbau in einem biologischen Abwasserreinigungsprozess, **dadurch gekennzeichnet, dass** das Mittel 15 - 40 Gew% einer 25 - 30 %igen FeX-Lösung und 5 - 20 Gew% einer 30 - 40 %igen CaX-Lösung, wobei X ein Chlorid, ein Nitrat und / oder ein Sulfat ist, 40 - 70 % einer 30 bis 40 %igen polymeren AIY-Lösung, wobei Y ein Chlorid, ein Sulfat, ein Nitrat, und / oder ein Hydroxid ist, 1 - 10 Gew% einer 30 - 70 %igen, auf Ascorbinsäure, Zitronensäure und/oder Milchsäure basierenden Carbonsäure Lösung sowie 1 - 15 Gew% einer auf Polyaminen basierenden Polymer-Lösung mit einem Wirksubstanzgehalt von 60 bis 99 % umfasst..

2. Mittel nach Anspruch 1, **dadurch gekennzeichnet, dass** es 15 - 40 Gew% einer 25 - 30 %igen, insbesondere 28%igen, Eisen-dichlorid-Lösung, 5 - 20 Gew% einer 30 - 40 %igen Calciumchlorid-Lösung, 40 - 70 % einer 30 bis 40 %igen, insbesondere 36 %igen, Polyaluminiumhydroxidchloridlösung, 1 - 10 Gew% einer 30 - 70 %igen Ascorbinsäure-Lösung sowie 1 - 15 Gew% einer Polyamin-Lösung mit einem Wirksubstanzgehalt von 60 bis 99 %umfasst.

3. Verfahren zur Zudosierung eines Mittels nach einem der vorangegangenen Ansprüche, **dadurch gekennzeichnet, dass** die Gesamtdosiermenge des Mittels 1 bis 1000 ppm aufweist.

4. Verfahren zur Zudosierung eines Mittels nach Anspruch 3, **dadurch gekennzeichnet, dass** zunächst die Eisensalz-Lösung sowie anschließend die Carbonsäure-Lösung und nach Abwarten einer Reaktionszeit von mindestens 15 Minuten die AIY-Lösung, danach die CaX-Lösung und abschließend die Polymer-Lösung zudosiert werden.

## Claims

1. Agent for emulsion and surfactant degradation in a biological wastewater treatment process, **characterised in that** the agent comprises 15-40 wt.% of a 25-30% FeX solution, 5-20 wt.% of a 30-40% CaX solution, where X is a chloride, a nitrate and/or a sulphate, 40-70 % of a 30 to 40% polymeric AlY solution, where Y is a chloride, a sulphate, a nitrate, and/or a hydroxide, 1-10 wt.% of a 30-70% carboxylic acid solution based on ascorbic acid, citric acid and/or lactic acid, and 1-15 wt.% of a polymer solution based on polyamines and having an active substance content of 60 to 99%.

2. Agent as claimed in claim 1, **characterised in that** it comprises 15-40 wt.% of a 25-30%, in particular 28%, iron dichloride solution, 5-20 wt.% of a 30-40% calcium chloride solution, 40-70% of a 30 to 40%, in particular 36%, polyaluminium hydroxide chloride solution, 1-10 wt. % of a 30-70% ascorbic acid solution and 1-15 wt.% of a polyamine solution having an active substance content of 60 to 99%.

3. Method for the metered addition of an agent as claimed in any one of the preceding claims, **characterised in that** the total metering quantity of the agent comprises 1 to 1000 ppm.

4. Method for the metered addition of an agent as claimed in claim 3, **characterised in that** firstly the iron salt solution and subsequently the carboxylic acid solution are added in a metered manner and, after waiting for a reaction time of at least 15 minutes, the AlY solution, then the CaX solution and finally the polymer solution are added in a metered manner.

## Revendications

1. Agent de dégradation des émulsifiants et des tensioactifs dans un processus biologique d'épuration des eaux usées, **caractérisé en ce que** cet agent contient de 15 à 40% en poids d'une solution de 25 à 30% de FeX et de 15 à 20% en poids d'une solution de 30 à 40% de CaX, X étant un chlorure, un nitrate et/ou un sulfate, de 40 à 70% d'une solution de 30 à 40% d'AlY polymère, de 1 à 10% en poids d'une solution de 30 à 70% d'acide carbonique à base d'acide ascorbique, d'acide citrique et/ou d'acide lactique ainsi que de 1 à 15% en poids d'une solution de polymère à base de polyamine avec une teneur en substance active de 60 à 99%.

2. Agent selon la revendication 1, **caractérisé en ce qu'**il contient de 15 à 40% en poids d'une solution de 25 à 30%, en particulier de 28% de dichlorure de fer, de 5 à 20% en poids d'une solution de 30 à 40% de chlorure de calcium, de 40 à 70% d'une solution de 30 à 40%, en particulier de 36%, de polyhydroxychlorure d'aluminium, de 1 à 10% en poids d'une solution de 30 à 70% en poids d'acide ascorbique ainsi que de 1 à 15% en poids d'une solution de polyamine avec une teneur en substance active de 60 à 99%

3. Procédé pour l'ajout d'un agent selon une des revendications précédentes, **caractérisé en ce que** la quantité ajoutée totale de l'agent est de 1 à 1000 ppm.

4. Procédé pour l'ajout d'un agent selon la revendication 3, **caractérisé en ce que** sont ajoutés d'abord la solution de sel de fer, puis la solution d'acide carbonique et, après un temps de réaction d'au moins 15 minutes, la solution d'AlY, puis la solution de CaX et enfin la solution de polymère.
